(19) Europäisches Patentamt

European Patent Office

Office européen des brevets

(11) **EP 1 585 343 A2**

(12) **EUROPEAN PATENT APPLICATION**

(43) Date of publication:
**12.10.2005 Bulletin 2005/41**

(51) Int Cl.$^7$: **H04N 9/04**

(21) Application number: **05006905.3**

(22) Date of filing: **30.03.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **31.03.2004 KR 2004022236
10.06.2004 KR 2004042620**

(71) Applicant: **SAMSUNG ELECTRONICS CO., LTD.
Gyeonggi-do (KR)**

(72) Inventors:
• **Kwon, Seong-Geun,
Samsung Electronics Co., Ltd.
Suwon-si, Gyeonggi-do (KR)**
• **Shin, Jae-Gwan, Samsung Electronics Co., Ltd.
Suwon-si, Gyeonggi-do (KR)**

(74) Representative: **Lang, Johannes et al
Bardehle Pagenberg Dost Altenburg Geissler,
Postfach 86 06 20
81633 München (DE)**

(54) **Image interpolation method**

(57)     A method is provided for interpolating a color image component. A Bayer pattern is extracted from an optical signal obtained by capturing an image of an object. An arithmetic average of values of red (R) or blue (B) components vertically or horizontally neighboring at least one green (G) position of the extracted Bayer pattern is computed, and an R or B component is interpolated into the at least one G position. A horizontal difference value and a vertical difference value are computed between G, B, or R component values of G positions neighboring at least one R or B position after interpolating the R or B component into the at least one G position.

A preset threshold value is compared with an absolute value of a resulting value obtained by subtracting the vertical difference value from the horizontal difference value. When the absolute value is greater than the threshold value, a G, B, or R component is interpolated into the at least one R or B position using an arithmetic average of G, B, or R component values of horizontally or vertically neighboring G positions associated with a smaller difference value of the horizontal and vertical difference values. When the absolute value is less than the threshold value, the G, B, or R component is interpolated into the at least one R or B position using a median technique.

FIG.5

EP 1 585 343 A2

**Description**

**BACKGROUND OF THE INVENTION**

Field of the Invention

The present invention relates generally to an image interpolation method. More particularly, the present invention relates to an image interpolation method that can generate an optimum quality image from an image captured by a mobile terminal with a camera function.

Description of the Related Art

Due to improvements in technology, mobile terminals can have other functions besides a basic voice communication function. Among the additional functions of the conventional mobile terminals, users tend to prefer a camera function.

The user can operate the camera function provided in a mobile terminal to capture an image of a desired object at any time and store the captured image. In this case, the image is captured by a charge coupled device (CCD) and a complementary metal oxide semiconductor (CMOS) which convert an optical signal reflected from the object into an electrical signal.

To obtain a color image using the above-mentioned CCD and CMOS, a color filter needs to be arranged in front of the CCD and CMOS.

A camera provided in many mobile terminals adopts a color filter called a color filter array (CFA), which is inexpensive and small. The CFA is attached in the form of a micro lens in front of the CCD and CMOS. The CFA passes only light of one color for one pixel and has a regularly arranged structure.

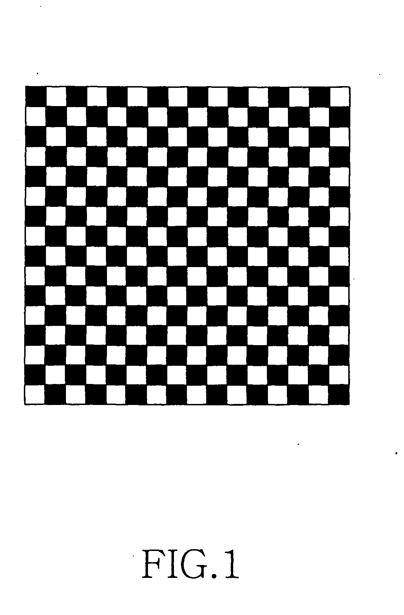

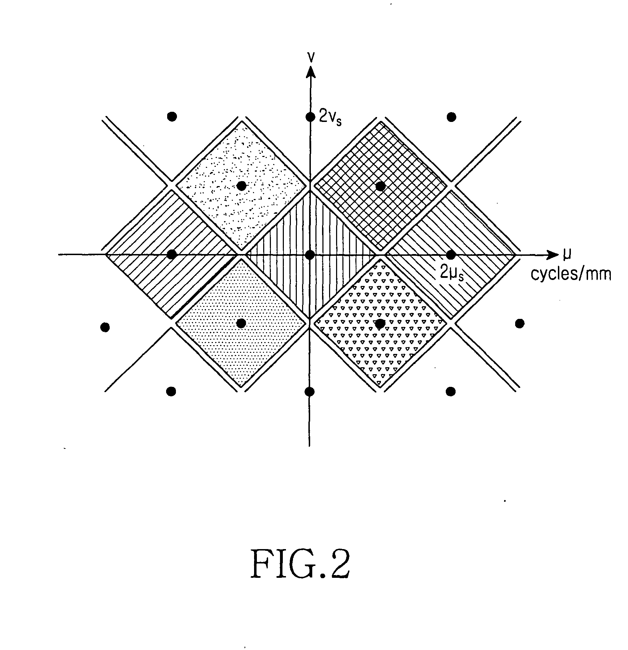

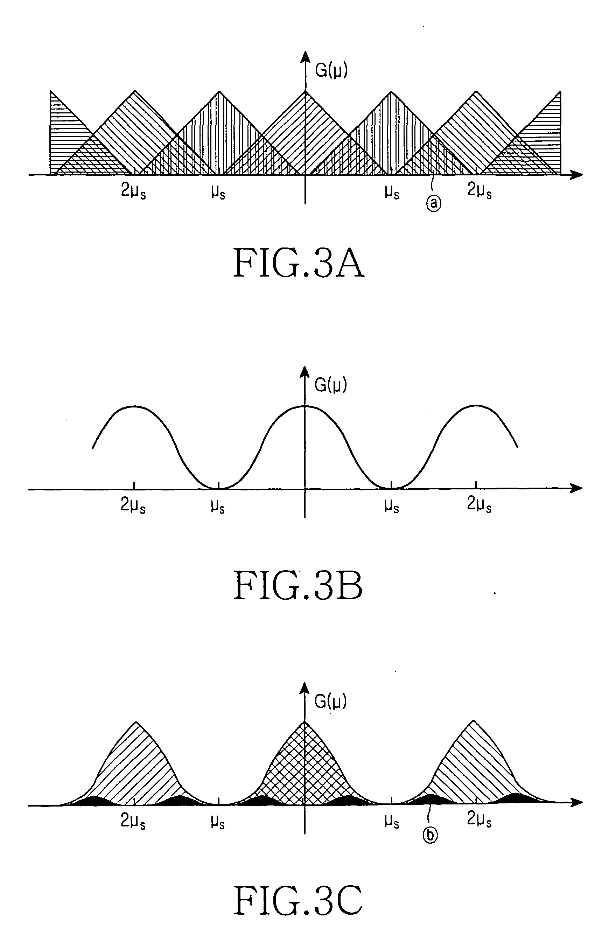

The CFA can have various patterns according to a color element array. A Bayer pattern is widely used, and is illustrated in FIG. 1. Characteristics of a spatial frequency in the Bayer pattern for green (G) are illustrated in FIG. 2. Output of a pixel positioned in the left-top end of FIG. 1 has only a G component. Red (R) and blue (B) components are alternately arranged in different lines. In FIG. 2, $\mu$ and $\nu$ denote horizontal and vertical frequency components associated with the G component, respectively, and are used to indicate how many samples are present in a unitary space (mm). Two-dimensional frequency characteristics can be expressed in a horizontal component, that is, in one dimension, as illustrated in FIG. 3A.

A process for computing three-color information of each pixel using color information of neighboring pixels is performed such that image interpolation for R, G, and B positions of the Bayer pattern of FIG. 1 can be performed. The conventional image interpolation algorithms widely used are a nearest neighbor replication algorithm using neighboring pixels with color information that is the same as color information to be computed for a given pixel, a bilinear interpolation algorithm, and a median interpolation algorithm.

Now, the conventional bilinear interpolation algorithm will be described.

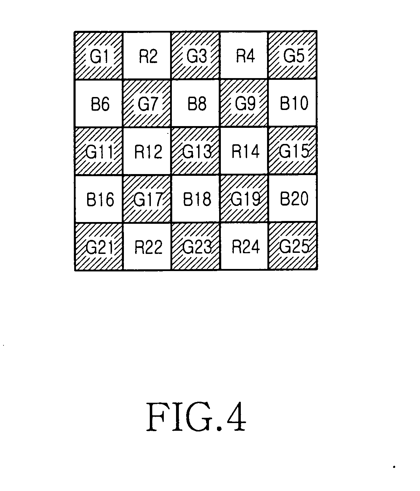

FIG. 4 illustrates an example of a Bayer pattern for explaining the conventional bilinear interpolation algorithm.

A process for interpolating a G component into a B or R position will be described with reference to FIG. 4.

For example, the following Equation 1 is used to interpolate a G component into a B8 position.

$$B_{8G} = \frac{(G_3 + G_7 + G_9 + G_{13})}{4} \tag{1}$$

In the above Equation 1, $B_{8G}$ denotes a G component value in the B8 position, and $G_3$, $G_7$, $G_9$, and $G_{13}$ denote G component values in G3, G7, G9, and G13 positions.

Interpolation of a G component into a B position and interpolation of a G component into an R position are performed in the same manner.

An arithmetic average of values of two neighboring R positions is computed to interpolate an R component into a G position. An arithmetic average of values of two neighboring B positions is computed to interpolate a B component into a G position. The arithmetic average is computed using the following Equation 2. For example, the following Equation 2 is used to interpolate B and R components into the G7 position.

$$\cdot G_{7B} = \frac{(B_6 + B_8)}{2}$$
$$G_{7R} = \frac{(R_2 + R_{12})}{2} \qquad\qquad (2)$$

In the above Equation 2, $G_{7B}$ denotes a B component value in a G7 position, $B_6$ and $B_8$ denote B component values in B6 and B8 positions, $G_{7R}$ denotes an R component value in the G7 position, and $R_2$ and $R_{12}$ denote R component values in R2 and R12 positions.

An arithmetic average of four diagonally neighboring pixel values is computed to interpolate an R component into a B position. The arithmetic average is computed using the following Equation 3. For example, the following Equation 3 is used to interpolate an R component into the B8 position and to interpolate a B component into the R12 position.

$$B_{8R} = \frac{(R_2 + R_4 + R_{12} + R_{14})}{4}$$
$$R_{12B} = \frac{(B_6 + B_8 + B_{16} + B_{18})}{4} \qquad\qquad (3)$$

In the above Equation 3, $B_{8R}$ denotes an R component value in the B8 position, $R_2$, $R_4$, $R_{12}$, and $R_{14}$ denote R component values in R2, R4, R12 and R14 positions, $R_{12B}$ denotes a B component value in the R12 position, and $B_6$, $B_8$, $B_{16}$, and $B_{18}$ denote B component values in B6, B8, B16 and B18 positions.

The above-mentioned conventional image interpolation method arithmetically averages color information of neighboring pixels in the up, down, left and right directions and in the diagonal direction to interpolate three color components for each pixel in the Bayer pattern.

Frequency characteristics of the arithmetic average through the conventional interpolation method are associated with a low pass filter as illustrated in FIG. 3B. Accordingly, frequency characteristics after interpolation of a G component for each pixel are illustrated in a graph of FIG. 3C serving as the product of graphs of FIG. 3A and FIG. 3B. A triangular line of FIG. 3A is changed to a curved line of FIG. 3C by interpolation. The product of a portion of FIG. 3B and a portion □ of FIG. 3A forms a portion ⓑ of FIG. 3C.

The conventional image interpolation method has a problem in that image resolution is degraded because four neighboring pixel values are arithmetically averaged in a state in which a distribution of neighboring pixel values is not taken into account. That is, the conventional image interpolation method has a problem in that image resolution is degraded because it has the same negative effect as the low pass filter. The conventional image interpolation method has another problem in that image resolution is more degraded when the number of output pixels is large. When a sampling frequency is low, an aliasing phenomenon causes a high frequency component to appear in a low frequency component, thereby degrading image resolution.

Thus, there is a need for an image interpolation method that can generate an optimum quality image from a captured image.

## SUMMARY OF THE INVENTION

Accordingly, the present invention has been designed to solve the above and other problems occurring in the prior art. Therefore, it is an aspect of the present invention to provide an image interpolation method that can generate the optimum quality image from a captured image.

The above and other aspects of the present invention can be achieved by a method for interpolating a color image component. The method includes extracting a Bayer pattern from an optical signal obtained by capturing an image of an object; computing an arithmetic average of values of red (R) or blue (B) components vertically or horizontally neighboring at least one green (G) position of the extracted Bayer pattern, and interpolating an R or B component into the at least one G position; computing a horizontal difference value and a vertical difference value between G, B, or R component values in G positions neighboring at least one R or B position after interpolating the R or B component into the at least one G position; comparing, with a preset threshold value, an absolute value of a resulting value obtained by subtracting the vertical difference value from the horizontal difference value, and interpolating a G, B, or R component into the at least one R or B position using an arithmetic average of G, B, or R component values of horizontally or vertically neighboring G positions associated with a smaller difference value of the horizontal and vertical difference values when the absolute value is greater than the threshold value; and interpolating the G, B, or R component into the at least one R or B position using a median technique when the absolute value is less than the threshold value.

The above and other aspects of the present invention can be achieved by a method for interpolating a color image component. The method includes extracting a Bayer pattern from an optical signal obtained by capturing an image of an object; computing an arithmetic average of values of red (R) or blue (B) components vertically or horizontally neighboring at least one green (G) position of the extracted Bayer pattern, and interpolating an R or B component into the at least one G position; performing a discrete cosine transform (DCT) operation on G components of G positions neighboring at least one R or B position after interpolating the R or B component into the at least one G position, analyzing a pattern of DCT coefficients, and interpolating a G component into the at least one R or B position; computing a horizontal difference value and a vertical difference value between B or R component values of the G positions neighboring the at least one R or B position, and interpolating a B or R component into the at least one R or B position using an arithmetic average of B or R component values of horizontally or vertically neighboring G positions associated with a smaller difference value of the horizontal and vertical difference values when the absolute value is greater than the threshold value; and interpolating the B or R component into the at least one R or B position using a median technique when the absolute value is less than the threshold value.

## BRIEF DESCRIPTION OF THE DRAWINGS

The above and other aspects and advantages of the present invention will be more clearly understood from the following detailed description taken in conjunction with the accompanying drawings, in which:

FIG. 1 illustrates an example of a conventional Bayer pattern for green (G);

FIG. 2 illustrates an example of spatial frequency characteristics of FIG. 1;

FIGS. 3A-3C illustrate examples frequency characteristics of a conventional image interpolation method;

FIG. 4 illustrates an example of a conventional Bayer pattern for a conventional bilinear interpolation algorithm;

FIG. 5 is a block diagram illustrating a mobile terminal in accordance with an embodiment of the present invention;

FIG. 6 illustrates an example of a Bayer pattern for image interpolation in accordance with an embodiment of the present invention;

FIGS. 7A and 7B are flow charts illustrating an image interpolation method in accordance with an embodiment of the present invention;

FIGS. 8A-8D illustrate an example of a Bayer pattern based on the image interpolation method in accordance with an embodiment of the present invention;

FIGS. 9A-9C illustrate examples of a Bayer pattern for interpolation of red (R) and blue (B) components into G positions in accordance with an embodiment of the present invention;

FIGS. 10A and 10B illustrate examples of a Bayer pattern for G components based on the directivity of neighboring components in the image interpolation method;

FIGS. 11A-11C illustrate examples frequency characteristics of the image interpolation method in accordance with an embodiment of the present invention;

FIGS. 12A and 12B are flow charts illustrating an image interpolation method in accordance with another embodiment of the present invention; and

FIGS. 13A-13C are explanatory views illustrating the image interpolation method in accordance with an embodiment of the present invention.

Throughout the drawings, it should be noted that like reference numbers are used to depict the same or similar elements, features and structures.

**DETAILED DESCRIPTION OF EXEMPLARY EMBODIMENTS**

Embodiments of the present invention will be described in detail herein below with reference to the accompanying drawings.

In the following description, a detailed description of known functions and configurations incorporated herein will be omitted for conciseness.

In the following description made in conjunction with embodiments of the present invention, specific details of a Bayer pattern are shown. The description of the specific details are exemplary. Those skilled in the art will appreciate that the present invention can be implemented without using the above-mentioned specific details.

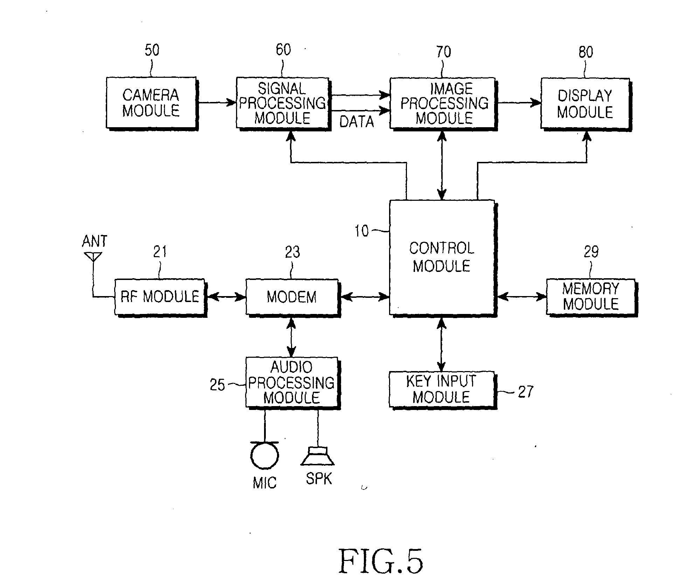

FIG. 5 is a block diagram illustrating a mobile terminal in accordance with an embodiment of the present invention.

Referring to FIG. 5, a radio frequency (RF) module 21 performs a communication function of the mobile terminal. The RF module 21 includes an RF transmitter (not shown) for up converting and amplifying a frequency of a signal to be transmitted and an RF receiver (not shown) for low-noise amplifying a received signal and down converting a frequency of the received signal.

A MODEM 23 includes a transmitter (not shown) for encoding and modulating the signal to be transmitted, and a receiver (not shown) for demodulating and decoding the received signal, and the like.

An audio processing module 25 performs a function for reproducing a received audio signal output from the MODEM 23 through a control module 10 or outputting a transmission audio signal generated from a microphone (MIC) to the MODEM 23 through the control module 10. Moreover, the audio processing module 25 converts voice data among data received from the MODEM 23 into audible sound, and then outputs the audible sound through a speaker (SPK). Further, the audio processing module 25 converts an input voice signal into data, and then outputs the data to the MODEM 23. The audio processing module 25 may be integrated into the control module 10.

A key input module 27 includes keys for inputting number and letter information and function keys for setting various functions.

A memory module 29 can comprise program and data memories, and the like. The program memory can store programs for controlling general operation of the mobile terminal. More specifically, the program memory stores a program for performing image interpolation for each pixel of an image of an object in camera mode in accordance with an embodiment of the present invention. The program memory stores a threshold value to be compared with an absolute value of a difference value between R, G, or B component values of pixels neighboring an R or B position such that an R, G, or B component is interpolated into the R or B position in accordance with an embodiment of the present invention. In this case, the threshold value is a high image quality value determined by image quality assessment. The data memory temporarily stores data generated during execution of the programs. More specifically, the data memory stores data of an image captured in the camera mode.

The control module 10 controls overall operation of the mobile terminal. The control module 10 may include the MODEM 23, and controls an operation for performing an image interpolation method in accordance with an embodiment of the present invention.

A camera module 50 captures an image, and includes a camera sensor for converting an optical signal of the captured image into an electrical signal. It is assumed that the camera sensor is a charge coupled device (CCD) sensor. The CCD sensor is adopted in front of a color filter array (CFA) with a regularly arranged structure for passing only an optical signal of one color through the camera module 50 pixel by pixel. According to the CFA, pixel values of a single color are extracted from pixels of a plurality of colors.

A signal processing module 60 processes an image signal output from the camera module 50, and can be implemented by a digital signal processor (DSP). The signal processing module 60 processes the image signal according to a sampling period. The signal processing module 60 processes the image signal through a Bayer pattern for estimating missing pixel information of each pixel using information of neighboring pixels.

An image processing module 70 performs a function for generating screen data to display the image signal processed by the signal processing module 60. The image processing module 70 transfers the image signal received under control of the control module 10 or data of the image captured by the camera module 50 according to a standard of a display module 80. The image processing module 70 compresses or decompresses the image data.

The display module 80 displays messages generated during execution of a program according to a control operation of the control module 10. When the image interpolation is performed in camera capture mode, the display module 80 displays the image signal processed by the image processing module 70 on a screen. The display module 80 displays user data output from the control module 10. The display module 80 can use a liquid crystal display (LCD). In case of the LCD, the display module 80 can include a LCD controller, a memory capable of storing image data, an LCD element, and so on. When the LCD is implemented using a touch-screen system, the key input module 27 and the LCD can serve as an input unit.

Operation of the mobile terminal will be described with reference to FIG. 5. When the user sets the signal transmission mode after a dialing operation through the key input module 27, the control module 10 detects the set signal transmission mode, controls the MODEM 23 to process the received dialed information, and controls the RF module 21 to convert the processed information into an RF signal and output the RF signal. Subsequently, when the called party generates a response signal, the phone module 10 detects the response signal through the RF module 21 and the MODEM 23. The user performs a communication function by means of a voice communication path established through the audio processing module 25. On the other hand, when the signal reception mode is performed, the phone module 10 detects the signal reception mode through the MODEM 23 and controls the audio processing module 25 to generate a ringtone. Subsequently, when the user responds, the phone module 10 detects the response. The user performs a communication function by means of a voice communication path established through the audio processing module 25. Although an example of voice communication in the signal transmission and reception modes has been described above, a data communication function for communicating packet data and image data other than the voice communication can be performed. When the idle mode is entered, or character or text communication is performed, the control module 10 controls the display module 80 to display character or text data processed through the MODEM 23.

The mobile terminal captures an image of a person or scene to display the captured image on a screen or transmit the captured image. First, the camera module 50 may be mounted inside or connected outside a portable phone. That is, the camera module 50 may be an external or internal camera. The camera module 50 can use the CCD sensor. The image captured by the camera module 50 is converted into an electrical signal by the internal CCD sensor, and the electrical signal is applied to the signal processing module 60. The signal processing module 60 samples the electrical signal, converts the sampled signal into digital image data into which RGB components of neighboring pixels have been interpolated, and outputs the digital image data to the image processing module 70.

Now, operation of the mobile terminal for performing image interpolation for an image captured by the camera module 50 when an image of a person or scene is captured will be described. First, the control module 10 controls the display module 80 to display key data indicative of the camera mode. The key data is generated from a key input through the key input module 27. Subsequently, the control module 10 converts an optical signal reflected from an object (such as a person or scene) into an electrical image signal through the camera module 50. The electrical image signal is filtered by the CFA for passing only an optical signal of one color pixel by pixel, and forms a regularly arranged Bayer pattern. The control module 10 controls the signal processing module 60 to obtain all color components (RGB) in R, G, and B positions of the Bayer pattern. The signal processing module 60 obtains three-color information of each pixel using color information of neighboring pixels and outputs a processed image signal based on the obtained three-color information.

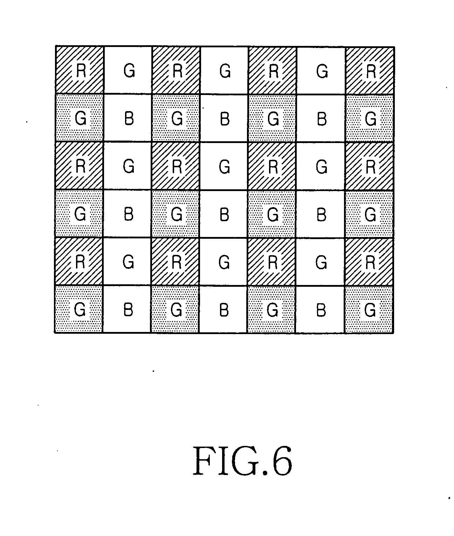

That is, a general Bayer pattern may be formed as illustrated in FIG. 6. In a Bayer pattern based on the CFA, G serving as a luminance component is distributed by 50%, and R and B serving as chrominance components are distributed by 25%, respectively. In this case, R and B are alternately arranged in different lines, and G is positioned between R and B. The three-color information can be obtained for each pixel of each Bayer pattern. This process will be described below in detail.

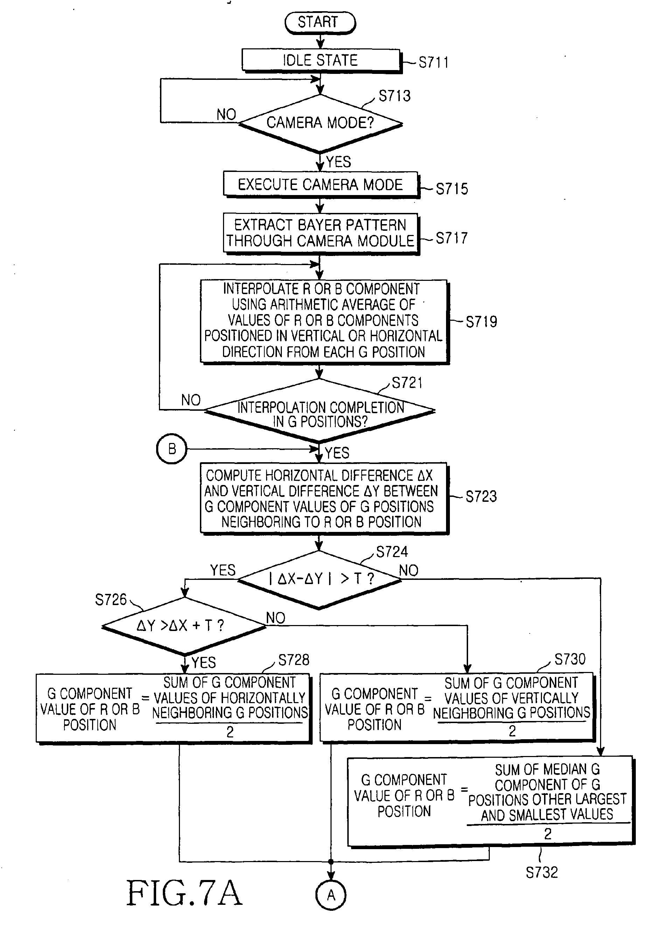

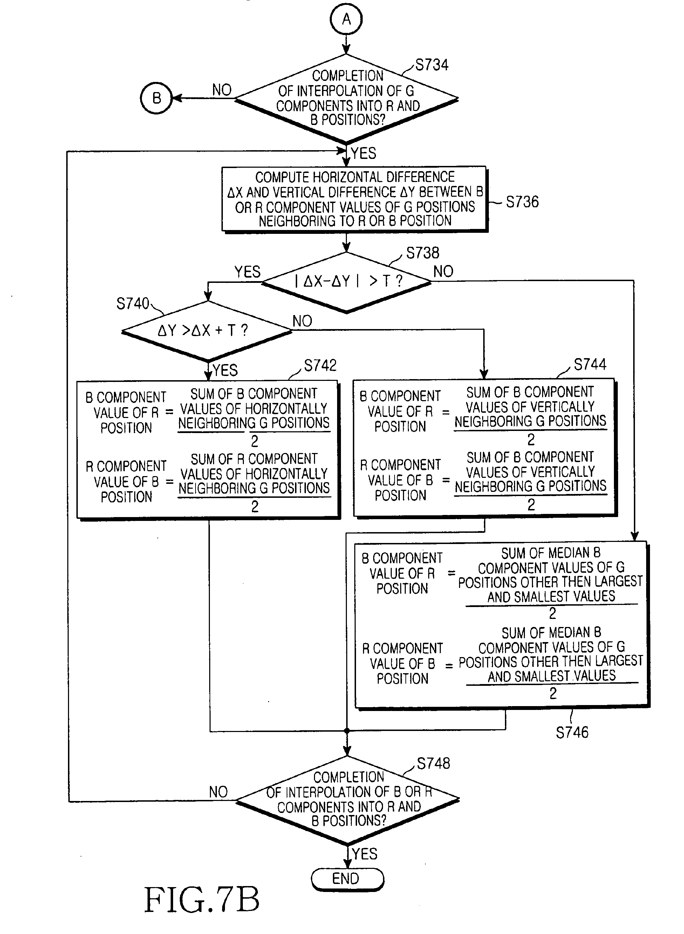

FIGS. 7A and 7B are flow charts illustrating an image interpolation method in accordance with an embodiment of the present invention.

Referring to FIGS. 7A and 7B, the control module 10 determines the camera mode in an idle state at steps S711 and S713. When it is determined that the operating mode is the camera mode, the control module 10 executes the camera mode, and applies a control signal to each module associated with the camera mode at step S715.

The control module 10 can obtain a Bayer pattern illustrated in FIG. 6 through the camera module 50 at step S717. Subsequently, the following image interpolation process is performed using the Bayer pattern through the camera module 50 according to a control operation of the control module 10.

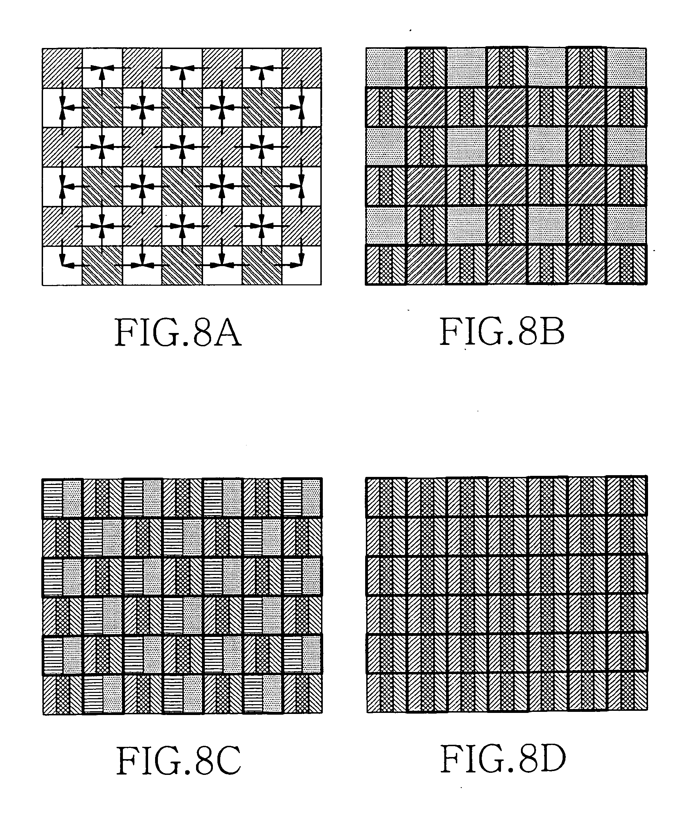

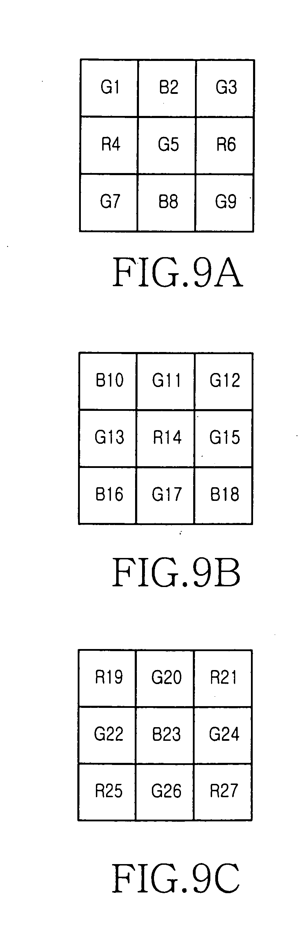

To interpolate R and B components into G positions of FIG. 6, the image interpolation process interpolates an R or B component using an arithmetic average of values of R or B components positioned in the vertical or horizontal direction from each of the G positions as illustrated in FIG. 8A at step S719. The image interpolation process will be described in detail with reference to FIG. 9.

FIG. 9 illustrates an example of a Bayer pattern for interpolation of R and B components into G positions in accordance with an embodiment of the present invention.

Referring to FIG. 9A, a process for interpolating a B component into a G5 position of the Bayer pattern computes a sum of B component values of B2 and B8 positioned in the vertical direction from the G5 position, and interpolates, into the G5 position, the B component having a resulting value obtained by dividing the sum by 2. To help in the understanding of the interpolation of R and B components into the G positions, a number is attached to each pixel component.

A process for interpolating an R component into the G5 position computes a sum of R component values of R4 and R6 positioned in the horizontal direction from the G5 position, and interpolates, into the G5 position, an R component having a resulting value obtained by dividing the sum by 2. These can be expressed as the following

Equation 4:

$$G_5 = \frac{(B_2 + B_8)}{2} \quad ...(a)$$

$$G_5 = \frac{(R_4 + R_6)}{2} \quad ...(b)$$

(4)

Equation 4(a) is used to compute a B component to be interpolated into the G5 position, and Equation 4(b) is used to compute an R component to be interpolated into the G5 position. In the above Equation 4, $B_2$ and $B_8$ denote B component values in the B2 and B8 positions, and $R_4$ and $R_6$ denote R component values in the R4 and R6 positions.

Subsequently, the control module 10 determines if the interpolation of R and B components into the G positions has ended at step S721. Until the interpolation of R and B components into the G positions ends, the above process is repeated. A result of the interpolation of R and B components into all the G positions is illustrated in FIG. 8B.

If the interpolation of R and B components into the G positions has ended, a process for interpolating G and B components into R positions, and a process for interpolating G and R components into B positions are performed. In this case, the image interpolation for the R positions and the image interpolation for the B positions are simultaneously performed. The order of priority for the interpolation processes for the R and B positions is not defined. Accordingly, the image interpolation in the R or B positions may be first performed. To help in the understanding of the image interpolation of the present invention, the interpolation of G components into the R and B positions, the interpolation of B components into the R positions, and the interpolation of R components into the B positions will be sequentially described.

First, a horizontal difference $\Delta X$ and a vertical difference $\Delta Y$ between G component values of G positions neighboring an R or B position are computed at step S723. The control module 10 computes the horizontal difference $\Delta X$ and the vertical difference $\Delta Y$ using the following Equation 5.

$\Delta X$ = |G component difference value between G positions horizontally

neighboring an R or B position into which a G component is to be interpolated|

$\Delta Y$ = |G component difference value between G positions vertically

neighboring an R or B position into which a G component is to be interpolated| (5)

For example, when a G component is interpolated into an R14 position as illustrated in FIG. 9B, the horizontal difference $\Delta X$ is an absolute value of $G_{13}$ - $G_{15}$, and the vertical difference $\Delta Y$ is an absolute value of $G_{11}$ - $G_{17}$. That is, $\Delta X = |G_{13} - G_{15}|$, and $\Delta Y = |G_{11} - G_{17}|$.

When a G component is interpolated into a B23 position as illustrated in FIG. 9C, the horizontal difference $\Delta X$ is an absolute value of $G_{22}$ - $G_{24}$, and the vertical difference $\Delta Y$ is an absolute value of $G_{20}$ - $G_{26}$. That is, $\Delta X = |G_{22} - G_{24}|$ and $\Delta Y = |G_{20} - G_{26}|$.

Subsequently, the control module 10 determines if an absolute value of a resulting value obtained by subtracting the vertical difference $\Delta Y$ from the horizontal difference $\Delta X$ is greater than a threshold value T at step S724. That is, the control module 10 determines if a condition of $|\Delta X - \Delta Y| > T$ is satisfied.

If the value of $|\Delta X - \Delta Y|$ is greater than T, the control module 10 determines if the vertical difference value of $\Delta Y$ is greater than a sum of the horizontal difference value $\Delta X$ and the threshold value T at step S726. That is, the control module 10 determines if a condition of $\Delta Y > \Delta X + T$ is satisfied.

If the value of $\Delta Y$ is greater than the value of $\Delta X + T$, the control module 10 computes a sum of G component values of horizontally neighboring G positions and interpolates, into an R position, a G component having a resulting value obtained by dividing the sum by 2 at step S728. That is, the G component of the R position can be computed using the following Equation 6:

$$R_{14G} = \frac{(G_{13} + G_{15})}{2}$$

(6)

In the above Equation 6, $R_{14G}$ denotes a value of a G component to be interpolated into the R14 position, and $G_{13}$ and $G_{15}$ denote G component values in G13 and G15 positions.

However, if the value of $\Delta Y$ is less than the value of $\Delta X$ +T, the control module 10 computes a sum of G component values of vertically neighboring G positions and interpolates, into an R position, a G component having a resulting value obtained by dividing the sum by 2 at step S730. That is, the G component of the R position can be computed using the following Equation 7:

$$R_{14G} = \frac{G_{11} + G_{17}}{2} \tag{7}$$

In the above Equation 7, $R_{14G}$ denotes a value of a G component to be interpolated into the R 14 position, and $G_{11}$ and $G_{17}$ denote G component values in G11 and G17 positions.

However, if the value of $|\Delta X - \Delta Y|$ is less than T, a G component having a resulting value obtained by dividing, by 2, a sum of median G component values of G positions other than the smallest and largest values is interpolated into an R position using a median technique at step S732.

Alternatively, if the value of $|\Delta X - \Delta Y|$ is less than T, the control module 10 may compute a sum of G component values of horizontally and vertically neighboring G positions and then interpolate, into the R position, a G component having a resulting value obtained by dividing the sum by 4. That is, the G component of the R position can be computed using the following Equation 8:

$$R_{14G} = \frac{(G_{11} + G_{13} + G_{15} + G_{17})}{4} \tag{8}$$

In the above Equation 8, $R_{14G}$ denotes a value of a G component to be interpolated into the R14 position, and $G_{11}$, $G_{13}$, $G_{15}$, and $G_{17}$ denote G component values in the G11, G13, G15, and G17 positions.

A G component can be interpolated into a B position in the same manner that a G component is interpolated into an R position as mentioned above.

That is, to interpolate the G component into the B position, the control module 10 determines if an absolute value of a resulting value obtained by subtracting the vertical difference $\Delta Y$ from the horizontal difference $\Delta X$ is greater than a threshold value T at step S724. That is, the control module 10 determines if a condition of $|\Delta X - \Delta Y| > $ T is satisfied.

If the value of $|\Delta X - \Delta Y|$ is greater than T, the control module 10 determines if the vertical difference value of $\Delta Y$ is greater than a sum of the horizontal difference value $\Delta X$ and the threshold value T at step S726. That is, the control module 10 determines if a condition of $\Delta Y > \Delta X$+T is satisfied.

If the value of $\Delta Y$ is greater than the value of $\Delta X$+T, the control module 10 computes a sum of G component values of horizontally neighboring G positions and interpolates, into the B position, a G component having a resulting value obtained by dividing the sum by 2 at step S728. That is, the G component in the B position can be computed using the following Equation 9:

$$B_{23G} = \frac{(G_{22} + G_{24})}{2} \tag{9}$$

In the above Equation 9, $B_{23G}$ denotes a value of a G component to be interpolated into a B23 position, and $G_{22}$ and $G_{24}$ denote G component values in G22 and G24 positions.

However, if the value of $\Delta Y$ is less than the value of $\Delta X$+T, the control module 10 computes a sum of G component values of vertically neighboring G positions and interpolates, into the B position, a G component having a resulting value obtained by dividing the sum by 2 at step S730. That is, the G component of the B position can be computed using the following Equation 10:

$$B_{23G} = \frac{(G_{20} + G_{26})}{2} \tag{10}$$

In the above Equation 10, $B_{23G}$ denotes a value of a G component to be interpolated into the B23 position, and $G_{20}$ and $G_{26}$ denote G component values in G20 and G23 positions.

However, if the value of $|\Delta X - \Delta Y|$ is less than T, a G component having a resulting value obtained by dividing, by 2, a sum of median G component values of G positions other than the smallest and largest values is interpolated into the B position using the median technique at step S732.

Alternatively, if the value of $|\Delta X - \Delta Y|$ is less than T, the control module 10 may compute a sum of G component values of horizontally and vertically neighboring G positions and then interpolate, into the B position, a G component having a resulting value obtained by dividing the sum by 4. That is, the G component of the B position can be computed using the following Equation 11:

$$B_{23G} = \frac{(G_{20} + G_{22} + G_{24} + G_{26})}{4} \tag{11}$$

In the above Equation 11, $B_{23G}$ denotes a value of a G component to be interpolated into the B23 position, and $G_{20}$, $G_{22}$, $G_{24}$, and $G_{26}$ denote G component values in the G20, G22, G24, and G26 positions.

Subsequently, the control module 10 determines if the interpolation of G components into all the R and B positions of the Bayer pattern has ended at step S734. Until the interpolation of G components into all the R and B positions ends, the above process is repeated. A result of the interpolation of G components into all the R and B positions is illustrated in FIG. 8C.

If the interpolation of G components into the R and B positions has ended, a process for interpolating B components into the R positions, and a process for interpolating R components into the B positions are performed. In this case, the image interpolation of B components into the R positions and the image interpolation of R components into the B positions are simultaneously performed. To help the understanding of the image interpolation in accordance with the present invention, the interpolation of B components into the R positions, and the interpolation of R components into the B positions will be sequentially described.

First, a process for interpolating a B component into an R position will be described.

A horizontal difference $\Delta X$ and a vertical difference $\Delta Y$ between B component values of G positions neighboring the R position are computed at step S736. The control module 10 computes the horizontal difference $\Delta X$ and the vertical difference $\Delta Y$ using the following Equation 12 to interpolate the B component into the R position.

$$\Delta X = |\text{B component difference value between G positions horizontally}$$

$$\text{neighboring an R position into which a B component is to be interpolated}|$$

$$\Delta Y = |\text{B component difference value between G positions vertically}$$

$$\text{beighboring an R position into which a B component is to be interpolated}| \tag{12}$$

For example, when a B component is interpolated into an R14 position as illustrated in FIG. 9B, the horizontal difference is an absolute value of a resulting value obtained by subtracting a B component value of a G15 position from a B component value of a G13 position. The vertical difference $\Delta Y$ is an absolute value of a resulting value obtained by subtracting a B component value of a G17 position from a B component value of a G11 position. That is, $\Delta X = |G_{13B} - G_{15B}|$, and $\Delta Y = |G_{11B} - G_{17B}|$. $G_{11B}$, $G_{13B}$, $G_{15B}$, and $G_{17B}$ denote B component values in the G11, G13, G15, and G17 positions.

When an R component is interpolated into a B23 position, the horizontal difference $\Delta X$ is an absolute value of a resulting value obtained by subtracting an R component value of a G24 position from an R component value of a G22 position. The vertical difference $\Delta Y$ is an absolute value of a resulting value obtained by subtracting an R component value of a G26 position from an R component value of a G20 position. That is, $\Delta X = |G_{22R} - G_{24R}|$, and $\Delta Y = |G_{20R} - G_{26R}|$. $G_{20R}$, $G_{22R}$, $G_{24R}$, and $G_{26R}$ denote R component values in the G20, G22, G24, and G26 positions.

Subsequently, the control module 10 determines if an absolute value of a resulting value obtained by subtracting the vertical difference $\Delta Y$ from the horizontal difference $\Delta X$ is greater than a threshold value T at step S738. That is, the control module 10 determines if a condition of $|\Delta X - \Delta Y| > T$ is satisfied.

If the value of $|\Delta X - \Delta Y|$ is greater than T, the control module 10 determines if the vertical difference value of $\Delta Y$ is greater than a sum of the horizontal difference value $\Delta X$ and the threshold value T at step S740. That is, the control module 10 determines if a condition of $\Delta Y > \Delta X + T$ is satisfied.

If the value of $\Delta Y$ is greater than the value of $\Delta X + T$, the control module 10 computes a sum of B component values of horizontally neighboring G positions and interpolates, into the R position, a B component having a resulting value obtained by dividing the sum by 2 at step S742. That is, the B component of the R position can be computed using the following Equation 13:

$$R_{14B} = \frac{(G_{13B} + G_{15B})}{2} \tag{13}$$

In the above Equation 13, $R_{14B}$ denotes a value of a B component to be interpolated into an R14 position, and $G_{13B}$ and $G_{15B}$ denote B component values in G13 and G15 positions.

However, if the value of $\Delta Y$ is less than the value of $\Delta X+T$, the control module 10 computes a sum of B component values of vertically neighboring G positions and interpolates, into the R position, a B component having a resulting value obtained by dividing the sum by 2 at step S744. That is, the B component of the R position can be computed using the following Equation 14:

$$R_{14B} = \frac{(G_{11B} + G_{17B})}{2} \tag{14}$$

In the above Equation 14, $R_{14B}$ denotes a value of a B component to be interpolated into the R14 position, and $G_{11B}$ and $G_{17B}$ denote B component values in G11 and G17 positions.

However, if the value of $|\Delta X - \Delta Y|$ is less than T, a B component having a resulting value obtained by dividing, by 2, a sum of median B component values of G positions other than the smallest and largest values is interpolated into an R position using the median technique at step S746.

Alternatively, if the value of $|\Delta X - \Delta Y|$ is less than T, the control module 10 may compute a sum of B component values of horizontally and vertically neighboring G positions and then interpolate, into the R position, a B component having a resulting value obtained by dividing the sum by 4. That is, the B component of the R position can be computed using the following Equation 15:

$$R_{14B} = \frac{(G_{11B} + G_{13B} + G_{15B} + G_{17B})}{4} \tag{15}$$

In the above Equation 15, $R_{14B}$ denotes a value of a B component to be interpolated into the R14 position, and $G_{11B}$, $G_{13B}$, $G_{15B}$, and $G_{17B}$ denote B component values in the G11, G13, G15, and G17 positions.

An R component can be interpolated into a B position in the same way that a B component is interpolated into an R position as mentioned above.

A horizontal difference $\Delta X$ and a vertical difference $\Delta Y$ between R component values of G positions neighboring the B position are computed (Step S736). The control module 10 computes the horizontal difference $\Delta X$ and the vertical difference $\Delta Y$ using the following Equation 16 to interpolate the R component into the B position.

$\Delta X = |$R component difference value between G positions horizontally

neighboring a B position into which an R component is to be interpolated$|$

$\Delta Y = |$R component difference value between G positions vertically

neighboring a B position into which an R component is to be interpolated$|$ $\tag{16}$

For example, when an R component is interpolated into a B23 position as illustrated in FIG. 9C, the horizontal difference $\Delta X$ is an absolute value of a resulting value obtained by subtracting an R component value of a G24 position from an R component value of a G22 position. The vertical difference $\Delta Y$ is an absolute value of a resulting value obtained by subtracting an R component value of a G26 position from an R component value of a G20 position. That is, $\Delta X = |G_{22R} - G_{24R}|$, and $\Delta Y = |G_{20R} - G_{26R}|$. $G_{20R}$, $G_{22R}$, $G_{24R}$, and $G_{26R}$ denote R component values in the G20, G22, G24, and G26 positions.

Subsequently, the control module 10 determines if an absolute value of a resulting value obtained by subtracting the vertical difference $\Delta Y$ from the horizontal difference $\Delta X$ is greater than a threshold value T at step S738. That is, the control module 10 determines if a condition of $|\Delta X - \Delta Y| > T$ is satisfied.

If the value of $|\Delta X - \Delta Y|$ is greater than T, the control module 10 determines if the vertical difference value of $\Delta Y$ is greater than a sum of the horizontal difference value $\Delta X$ and the threshold value T at step S740. That is, the control module 10 determines if a condition of $\Delta Y > \Delta X + T$ is satisfied.

If the value of $\Delta Y$ is greater than the value of $\Delta X$ +T, the control module 10 computes a sum of R component values of horizontally neighboring G positions and interpolates, into the B position, an R component having a resulting value obtained by dividing the sum by 2 at step S742. That is, the R component of the B position can be computed using the following Equation 17:

$$B_{23R} = \frac{(G_{22R} + G_{24R})}{2} \tag{17}$$

In the above Equation 17, $B_{23R}$ denotes a value of an R component to be interpolated into the B23 position, and $G_{22R}$ and $G_{24R}$ denote R component values in G22 and G24 positions.

If the value of $\Delta Y$ is less than the value of $\Delta X$+T, the control module 10 computes a sum of R component values of vertically neighboring G positions and interpolates, into the B position, an R component having a resulting value obtained by dividing the sum by 2 at step S744. That is, the R component of the B position can be computed using the following Equation 18:

$$B_{23R} = \frac{(G_{20R} + G_{26R})}{2} \tag{18}$$

In the above Equation 18, $B_{23R}$ denotes a value of an R component to be interpolated into the B23 position, and $G_{20R}$ and $G_{26R}$ denote R component values in G20 and G26 positions.

However, if the value of $|\Delta X - \Delta Y|$ is less than T, an R component having a resulting value obtained by dividing, by 2, a sum of median R component values of G positions other than the smallest and largest values is interpolated into a B position using the median technique at step S746.

Alternatively, if the value of $|\Delta X - \Delta Y|$ is less than T, the control module 10 may compute a sum of R component values of horizontally and vertically neighboring G positions and then interpolate, into the B position, an R component having a resulting value obtained by dividing the sum by 4. That is, the R component of the B position can be computed using the following Equation 19:

$$B_{23R} = \frac{(G_{20R} + G_{22R} + G_{24R} + G_{26R})}{4} \tag{19}$$

In the above Equation 19, $B_{23R}$ denotes a value of an R component to be interpolated into the R23 position, and $G_{20R}$, $G_{22R}$, $G_{24R}$, and $G_{26R}$ denote R component values in the G20, G22, G24, and G26 positions.

Subsequently, the control module 10 determines if the interpolation of B and R components into all the R and B positions of the Bayer pattern has ended at step S748. Until the interpolation of B and R components into all the R and B positions ends, the above process is repeated. A result of the interpolation of all missing components into all the R, G, and B positions is illustrated in FIG. 8D.

Accordingly, the image interpolation method of the present invention interpolates missing color information pixel by pixel. When comparable pixels neighboring pixels positioned on the edges of the Bayer pattern are not present, components of adjacent pixels are used as they are.

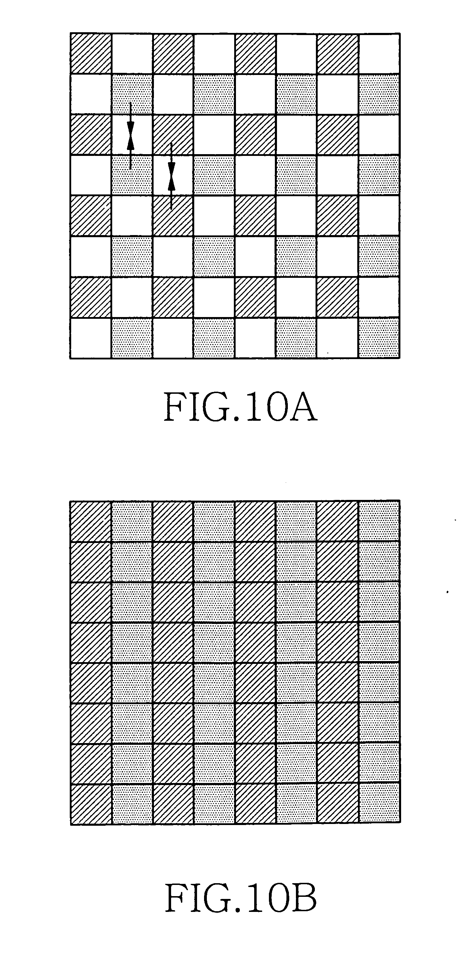

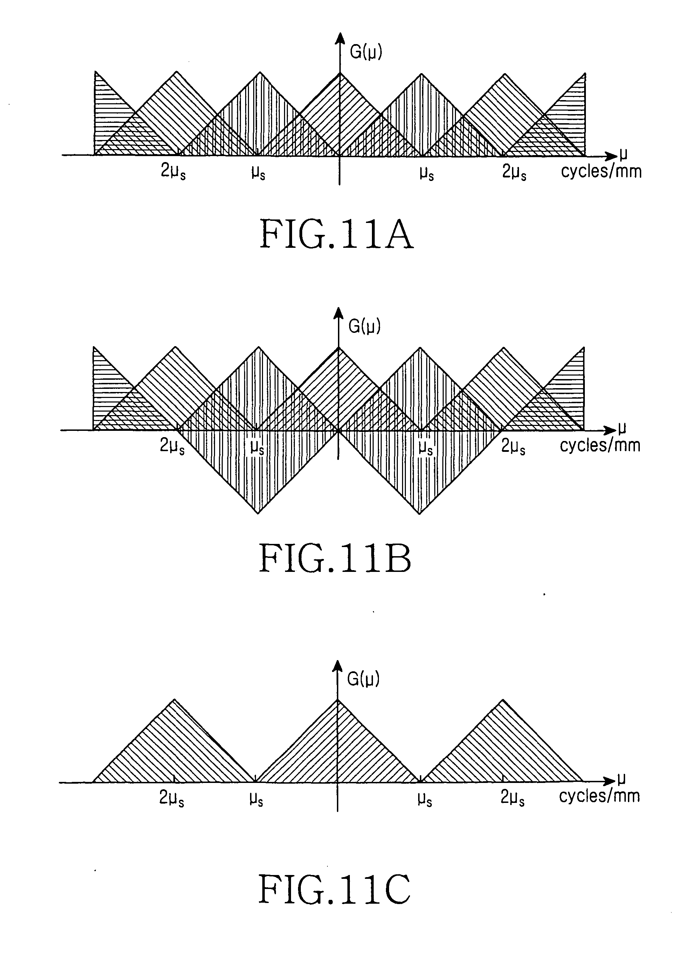

When a G component is interpolated according to the directivity of neighboring components as illustrated in FIG. 10A, it can be seen that the G component is interpolated in the vertical direction as illustrated in FIG. 10B. Frequency characteristics of odd horizontal components illustrated in FIG. 10A are the same as illustrated in FIG. 11A. Frequency characteristics of even horizontal components illustrated in FIG. 11A have a phase change as illustrated in FIG. 11B.

According to frequency characteristics of the pattern into which color components are interpolated as illustrated in FIG. 10B, spectra of odd and even lines are out of phase from each other at an odd multiple of a sampling frequency. When the out-of-phase components are cancelled out each other, a result is illustrated in FIG. 11C. The interpolation method taking into account the out-of-phase components has spatial frequency characteristics as illustrated in FIG. 11C.

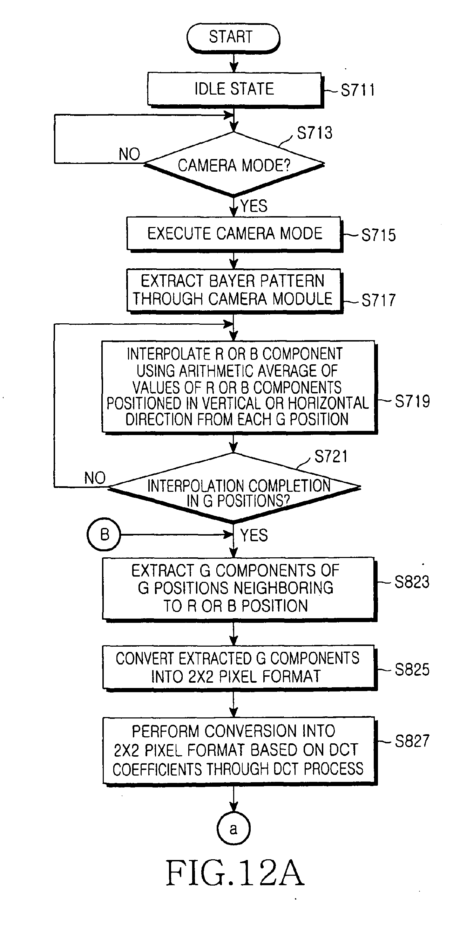

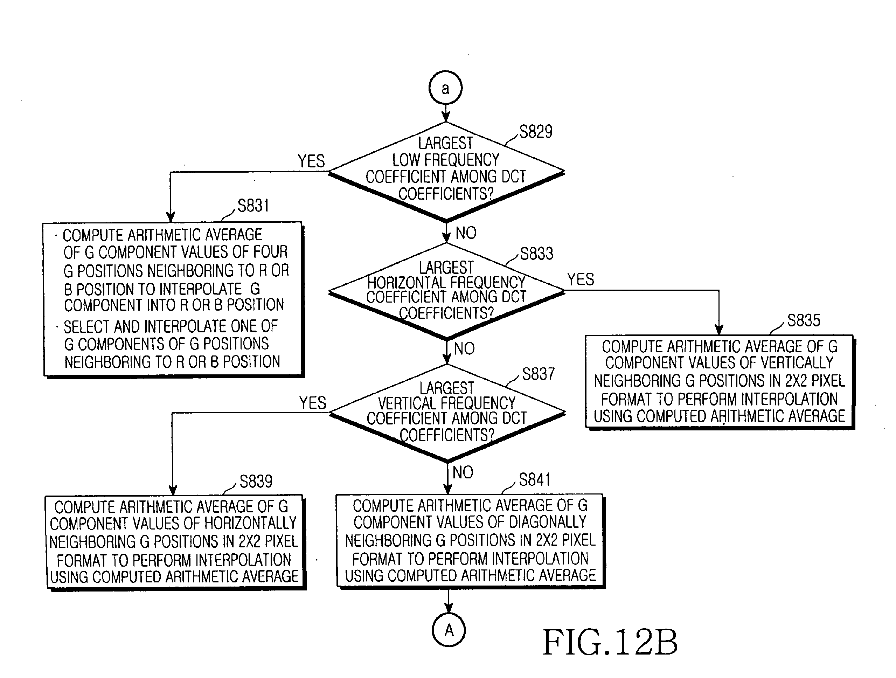

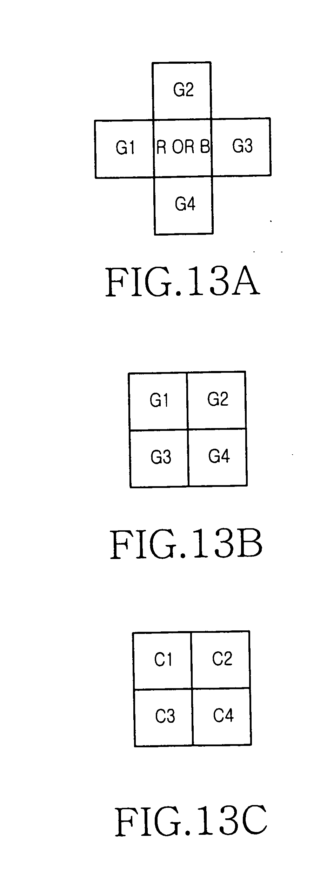

FIGS. 12A and 12B are flow charts illustrating an image interpolation method in accordance with another embodiment of the present invention, and FIG. 13 is an explanatory view illustrating the image interpolation method in accordance with an embodiment of the present invention.

Referring to FIGS. 7A, 7B, 12A and 12B, steps S711 to S721 illustrate a method for interpolating R and B components into G positions, and steps S734 to S748 illustrate a method for interpolating B components into R positions and interpolating R components into B positions. Because the process of steps S711 to S721 illustrated in FIG. 12A is the same as that of FIG. 7A, a description is omitted. The process of FIGS. 12A and 12B is performed in place of FIG. 7A, and the process of FIG. 7B is performed after the process of FIG. 12B is performed.

To interpolate the G components into the R and B positions after interpolating the R and B components into the G positions, the control module 10 extracts G components adjacent to an R or B position at step S823.

Subsequently, the control module 10 converts the extracted G components into the format of 2 x 2 pixels at step S825. In this case, the control module 10 arranges, in the first column of the first row, a G component of a G position on the left side of the R or B position into which the G component is to be interpolated. The control module 10 arranges, in the second column of the first row, a G component of a G position on the upper side of the R or B position. The control module 10 arranges, in the second column of the second row, a G component of a G position on the lower side of the R or B position. The control module 10 arranges, in the first column of the second row, a G component of a G position on the right side of the R or B position. This process can be seen from FIGS. 13A and 13B.

Subsequently, the control module 10 performs a conversion into a 2 x 2 pixel format based on discrete cosine transform (DCT) coefficients through a DCT process at step S827.

That is, image data defined by a two-dimensional matrix is converted from a spatial domain to a frequency domain. As illustrated in FIG. 13C, the DCT coefficients C1, C2, C3, and C4 are a low frequency coefficient, a horizontal frequency coefficient, a vertical frequency coefficient, and a high frequency coefficient, respectively.

The control module 10 determines if the low frequency coefficient of the DCT coefficients is largest at Step S829. If the low frequency coefficient is the largest, the control module 10 computes an arithmetic average of G component values of four G positions neighboring the R or B position, and interpolates a G component having the computed arithmetic average into the R or B position at step S831. That is, if the low frequency coefficient is the largest among the DCT coefficients, it indicates that an entire pattern is uniform. Accordingly, the G component values of the neighboring G positions are arithmetically averaged, and the G component having the arithmetic average is interpolated.

The G component can be interpolated into the R or B position using the following Equation 20:

$$R + \frac{G1+G2+G3+G4}{4}, \; B = \frac{G1+G2+G3+G4}{4} \tag{20}$$

In the above Equation 20, G1, G2, G3, and G4 denote G component values of G positions neighboring the R or B position.

Alternatively, one of the G components of the four G positions neighboring the R or B position may be selected without making use of the above Equation 20, such that the selected G component is interpolated into the R or B position at step S831. That is, one of the G component values G1, G2, G3, and G4 is selected, and the G component having the selected value can be interpolated into the R or B position.

However, if the low frequency coefficient is not the largest among the DCT coefficients, the control module 10 determines if the horizontal frequency coefficient is the largest at step S833. If the horizontal frequency coefficient is the largest, the control module 10 computes an arithmetic average of G component values of G positions vertically neighboring the R or B position in the $2 \times 2$ pixel format, and interpolates the G component having the computed arithmetic average into the R or B position at step S835. That is, if the horizontal frequency coefficient is the largest among the DCT coefficients, it indicates that a horizontal pattern in the $2 \times 2$ pixel format has a significant difference. Accordingly, a vertical pattern in the $2 \times 2$ pixel format must be used.

In this case, the G component can be interpolated into the R or B position using the following Equation 21:

$$R = \frac{G1+G3}{2} \quad or \quad R = \frac{G2+G4}{2}$$
$$B = \frac{G1+G3}{2} \quad or \quad B = \frac{G2+G4}{2} \tag{21}$$

In the above Equation 21, R is a G component value in the R position, and B is a G component value in the B position. G1 and G3, or G2 and G4 are G component values in vertically neighboring G positions in the $2 \times 2$ pixel format.

However, if the horizontal frequency coefficient is not the largest among the DCT coefficients, the control module 10 determines if the vertical frequency coefficient is the largest at step S837. If the vertical frequency coefficient is the largest, the control module 10 computes an arithmetic average of G component values of G positions horizontally neighboring the R or B position in the 2 × 2 pixel format, and interpolates the G component having the computed arithmetic average into the R or B position at step S839. That is, if the vertical frequency coefficient is the largest among the DCT coefficients, it indicates that a vertical pattern in the 2 × 2 pixel format has a significant difference. Accordingly, a horizontal pattern in the 2 × 2 pixel format must be used.

In this case, the G component can be interpolated into the R or B position using the following Equation 22:

$$R = \frac{G1+G2}{2} \quad or \quad R = \frac{G3+G4}{2}$$
$$B = \frac{G1+G2}{2} \quad or \quad R = \frac{G3+G4}{2} \tag{22}$$

In the above Equation 22, R is a G component value in the R position, and B is a G component value in the B position. G1 and G2 or G3 and G4 are G component values in horizontally neighboring G positions in the 2 × 2 pixel format.

However, if the vertical frequency coefficient is not the largest among the DCT coefficients, it is determined that the high frequency coefficient is largest among the DCT coefficients. The control module 10 computes an arithmetic average of G component values of G positions diagonally neighboring the R or B position in the 2 × 2 pixel format, and interpolates the G component having the computed arithmetic average into the R or B position at step S841. That is, if the high frequency coefficient is the largest among the DCT coefficients, it indicates that horizontal and vertical patterns in the 2 × 2 pixel format have a significant difference. Accordingly, a diagonal pattern in the 2 × 2 pixel format must be used.

In this case, the G component can be interpolated into the R or B position using the following Equation 23:

$$R = \frac{G1+G4}{2} \quad or \quad R = \frac{G2+G3}{2}$$
$$B = \frac{G1+G4}{2} \quad or \quad R = \frac{G2+G3}{2} \tag{23}$$

In the above Equation 23, R is a G component value in the R position, and B is a G component value in the B position. G1 and G4 or G2 and G3 are G component values in diagonally neighboring G positions in the 2 × 2 pixel format.

Subsequently, a process for interpolating a B component into an R position, and a process for interpolating an R component into a B position are performed in the same way that a G component is interpolated into the R or B position as mentioned above. A description of the interpolation of the B components into the R and B positions is omitted.

Although certain embodiments of the present invention have been disclosed for illustrative purposes, those skilled in the art will appreciate that various modifications, additions and substitutions are possible, without departing from the scope of the present invention. Therefore, the present invention is not limited to the above-described embodiments, but is defined by the following claims, along with their full scope of equivalents.

**Claims**

1. A method for interpolating a color image component, comprising:

extracting a Bayer pattern from an optical signal obtained by capturing an image of an object;

computing an arithmetic average of values of red (R) or blue (B) components vertically or horizontally neighboring at least one green (G) position of the extracted Bayer pattern, and interpolating an R or B component into the at least one G position;

computing a horizontal difference value and a vertical difference value between G, B, or R component values of G positions neighboring at least one R or B position after interpolating the R or B component into the at least one G position;

comparing, with a preset threshold value, an absolute value of a resulting value obtained by subtracting the vertical difference value from the horizontal difference value, and interpolating a G, B, or R component into the at least one R or B position using an arithmetic average of G, B, or R component values of horizontally or vertically neighboring G positions associated with a smaller difference value of the horizontal and vertical difference values when the absolute value is greater than the threshold value; and

interpolating the G, B, or R component into the at least one R or B position using a median technique when the absolute value is less than the threshold value.

2. The method according to claim 1, wherein the horizontal difference value is an absolute value of a difference value between pixels horizontally neighboring an interpolation position.

3. The method according to claim 1, wherein the vertical difference value is an absolute value of a difference value between pixels vertically neighboring an interpolation position.

4. The method according to claim 1, wherein comparing and interpolating comprise:

comparing, with the preset threshold value, the absolute value of the resulting value obtained by subtracting the vertical difference value from the horizontal difference value between the G component values;

when the absolute value is greater than the threshold value and the horizontal difference value between the G component values is less than the vertical difference value, interpolating the G component into the at least one R or B position using the arithmetic average of the G component values of the horizontally neighboring G positions; and

when the absolute value is greater than the threshold value and the horizontal difference value between the G component values is greater than the vertical difference value, interpolating the G component into the at least one R or B position using the arithmetic average of the G component values of the vertically neighboring G positions.

5. The method according to claim 1, wherein when the absolute value of the resulting value obtained by subtracting the vertical difference value from the horizontal difference value between the G component values is less than the preset threshold value, the G component is interpolated into the at least one R or B position using the median technique.

6. The method according to claim 1, wherein comparing and interpolating comprise:

comparing, with the preset threshold value, the absolute value of the resulting value obtained by subtracting the vertical difference value from the horizontal difference value between the B or R component values;

when the absolute value is greater than the threshold value and the horizontal difference value between the B or R component values is less than the vertical difference value, interpolating the B or R component into the at least one R or B position using the arithmetic average of the B or R component values of the horizontally neighboring G positions; and

when the absolute value is greater than the threshold value and the horizontal difference value between the B or R component values is greater than the vertical difference value, interpolating the B or R component into the at least one R or B position using the arithmetic average of the B or R component values of the vertically neighboring G positions.

7. The method according to claim 1, wherein when the absolute value of the resulting value obtained by subtracting the vertical difference value from the horizontal difference value between the B or R component values is less than the preset threshold value, the B or R component is interpolated into the at least one R or B position using the median technique.

8. The method according to claim 1, wherein when the absolute value of the resulting value obtained by subtracting the vertical difference value from the horizontal difference value between the G component values is less than the preset threshold value, the G component is interpolated into the at least one R or B position using an arithmetic average of G component values of horizontally and vertically neighboring G positions other than the median technique.

**9.** The method according to claim 1, wherein when the absolute value of the resulting value obtained by subtracting the vertical difference value from the horizontal difference value between the B or R component values is less than the preset threshold value, the B or R component is interpolated into the at least one R or B position using an arithmetic average of B or R component values of horizontally and vertically neighboring G positions other than the median technique.

**10.** A method for interpolating a color image component, comprising:

extracting a Bayer pattern from an optical signal obtained by capturing an image of an object;

computing an arithmetic average of values of red (R) or blue (B) components vertically or horizontally neighboring at least one green (G) position of the extracted Bayer pattern, and interpolating an R or B component into' the at least one G position;

performing a discrete cosine transform (DCT) operation on G components of G positions neighboring at least one R or B position after interpolating the R or B component into the at least one G position, analyzing a pattern of DCT coefficients, and interpolating a G component into the at least one R or B position;

computing a horizontal difference value and a vertical difference value between B or R component values of the G positions neighboring the at least one R or B position, and interpolating a B or R component into the at least one R or B position using an arithmetic average of B or R component values of horizontally or vertically neighboring G positions associated with a smaller difference value of the horizontal and vertical difference values when the absolute value is greater than the threshold value; and

interpolating the B or R component into the at least one R or B position using a median technique when the absolute value is less than the threshold value.

**11.** The method according to claim 10, wherein analyzing the DCT coefficient pattern comprises:

analyzing the pattern using a largest coefficient among the DCT coefficients.

**12.** The method according to claim 10, wherein interpolating the G component into the at least one R or B position comprises:

extracting G components vertically and horizontally neighboring the at least one R or B position;

converting the extracted G components into a predetermined horizontal and vertical pixel format; and

performing the DCT operation on the predetermined horizontal and vertical pixel format, and performing a conversion into a predetermined horizontal and vertical pixel format configured by the DCT coefficients.

**13.** The method according to claim 12, wherein the predetermined horizontal and vertical pixel format is a $2 \times 2$ pixel format.

**14.** The method according to claim 12, wherein converting the extracted G components into the predetermined horizontal and vertical pixel format comprises:

arranging, in a first column of a first row, a G component of a G position on a left side of the at least one R or B position into which the G component is to be interpolated;

arranging, in a second column of the first row, a G component of a G position on an upper side of the at least one R or B position;

arranging, in the second column of a second row, a G component of a G position on a lower side of the at least one R or B position; and

arranging, in the first column of the second row, a G component of a G position on a right side of the at least one R or B position.

15. The method according to claim 10, wherein interpolating the G component into the at least one R or B position comprises:

determining if a low frequency coefficient is largest among the DCT coefficients, and selecting and interpolating an arbitrary one of the G components of the G positions neighboring the at least one R or B position if the low frequency coefficient is largest among the DCT coefficients;

determining if a horizontal frequency coefficient is largest among the DCT coefficients, and interpolating the G component into the at least one R or B position using an arithmetic average of G component values of vertically neighboring G positions in the predetermined horizontal and vertical pixel format if the horizontal frequency coefficient is largest among the DCT coefficients;

determining if a vertical frequency coefficient is largest among the DCT coefficients, and interpolating the G component into the at least one R or B position using an arithmetic average of G component values of horizontally neighboring G positions in the predetermined horizontal and vertical pixel format if the vertical frequency coefficient is largest among the DCT coefficients; and

determining if a high frequency coefficient is largest among the DCT coefficients, and interpolating the G component into the at least one R or B position using an arithmetic average of G component values of diagonally neighboring G positions in the predetermined horizontal and vertical pixel format if the high frequency coefficient is largest among the DCT coefficients.

16. The method according to claim 15, wherein if the low frequency coefficient is largest among the DCT coefficients, any one of the G components of the neighboring G positions is selected or an arithmetic average of the G component values of the neighboring G positions is computed.

17. The method according to claim 15, wherein if the horizontal frequency coefficient, the vertical frequency coefficient, or the high frequency coefficient is large among the DCT coefficients, an arbitrary one of the G components of the vertically, horizontally, or diagonally neighboring G positions is selected, and the selected G component is interpolated into the at least one R or B position.

18. The method according to claim 10, wherein when the absolute value of the resulting value obtained by subtracting the vertical difference value from the horizontal difference value between the B or R component values is less than the preset threshold value, the B or R component is interpolated into the at least one R or B position using an arithmetic average of B or R component values of horizontally and vertically neighboring G positions other than a median technique.

FIG.1

FIG.2

FIG.3A

FIG.3B

FIG.3C

| | | | | |
|---|---|---|---|---|
| G1 | R2 | G3 | R4 | G5 |
| B6 | G7 | B8 | G9 | B10 |
| G11 | R12 | G13 | R14 | G15 |
| B16 | G17 | B18 | G19 | B20 |
| G21 | R22 | G23 | R24 | G25 |

# FIG.4

FIG.5

| R | G | R | G | R | G | R |
|---|---|---|---|---|---|---|
| G | B | G | B | G | B | G |
| R | G | R | G | R | G | R |
| G | B | G | B | G | B | G |
| R | G | R | G | R | G | R |
| G | B | G | B | G | B | G |

FIG.6

START

IDLE STATE — S711

CAMERA MODE? — S713
NO

YES

EXECUTE CAMERA MODE — S715

EXTRACT BAYER PATTERN THROUGH CAMERA MODULE — S717

INTERPOLATE R OR B COMPONENT USING ARITHMETIC AVERAGE OF VALUES OF R OR B COMPONENTS POSITIONED IN VERTICAL OR HORIZONTAL DIRECTION FROM EACH G POSITION — S719

INTERPOLATION COMPLETION IN G POSITIONS? — S721
NO

B

YES

COMPUTE HORIZONTAL DIFFERENCE $\Delta X$ AND VERTICAL DIFFERENCE $\Delta Y$ BETWEEN G COMPONENT VALUES OF G POSITIONS NEIGHBORING TO R OR B POSITION — S723

$|\Delta X - \Delta Y| > T$ ? — S724
YES          NO

$\Delta Y > \Delta X + T$ ? — S726
YES          NO

G COMPONENT VALUE OF R OR B POSITION = $\dfrac{\text{SUM OF G COMPONENT VALUES OF HORIZONTALLY NEIGHBORING G POSITIONS}}{2}$ — S728

G COMPONENT VALUE OF R OR B POSITION = $\dfrac{\text{SUM OF G COMPONENT VALUES OF VERTICALLY NEIGHBORING G POSITIONS}}{2}$ — S730

G COMPONENT VALUE OF R OR B POSITION = $\dfrac{\text{SUM OF MEDIAN G COMPONENT OF G POSITIONS OTHER LARGEST AND SMALLEST VALUES}}{2}$ — S732

A

FIG.7A

Ⓐ

S734

COMPLETION
OF INTERPOLATION OF G
COMPONENTS INTO R AND
B POSITIONS?

Ⓑ ← NO

↓ YES

COMPUTE HORIZONTAL DIFFERENCE
ΔX AND VERTICAL DIFFERENCE ΔY BETWEEN B
OR R COMPONENT VALUES OF G POSITIONS — S736
NEIGHBORING TO R OR B POSITION

S738

YES ← | ΔX−ΔY | > T ? → NO

S740

ΔY >ΔX + T ? → NO

↓ YES

S742

B COMPONENT     SUM OF B COMPONENT
VALUE OF R  =  VALUES OF HORIZONTALLY
POSITION       NEIGHBORING G POSITIONS
                        ─────────────────────
                                    2

R COMPONENT     SUM OF R COMPONENT
VALUE OF B  =  VALUES OF HORIZONTALLY
POSITION       NEIGHBORING G POSITIONS
                        ─────────────────────
                                    2

S744

B COMPONENT     SUM OF B COMPONENT
VALUE OF R  =  VALUES OF VERTICALLY
POSITION       NEIGHBORING G POSITIONS
                        ─────────────────────
                                    2

R COMPONENT     SUM OF B COMPONENT
VALUE OF B  =  VALUES OF VERTICALLY
POSITION       NEIGHBORING G POSITIONS
                        ─────────────────────
                                    2

B COMPONENT          SUM OF MEDIAN B
VALUE OF R  =   COMPONENT VALUES OF G
POSITION        POSITIONS OTHER THEN LARGEST
                    AND SMALLEST VALUES
                ─────────────────────────────
                              2

R COMPONENT          SUM OF MEDIAN B
VALUE OF B  =   COMPONENT VALUES OF G
POSITION        POSITIONS OTHER THEN LARGEST
                    AND SMALLEST VALUES
                ─────────────────────────────
                              2

S746

S748

NO ← COMPLETION
OF INTERPOLATION OF B OR R
COMPONENTS INTO R AND
B POSITIONS?

↓ YES

END

# FIG.7B

FIG.8A

FIG.8B

FIG.8C

FIG.8D

| G1 | B2 | G3 |
|----|----|----|
| R4 | G5 | R6 |
| G7 | B8 | G9 |

# FIG.9A

| B10 | G11 | G12 |
|-----|-----|-----|
| G13 | R14 | G15 |
| B16 | G17 | B18 |

# FIG.9B

| R19 | G20 | R21 |
|-----|-----|-----|
| G22 | B23 | G24 |
| R25 | G26 | R27 |

# FIG.9C

FIG.10A

FIG.10B

FIG.11A

FIG.11B

FIG.11C

START

IDLE STATE — S711

CAMERA MODE? — S713
NO

YES

EXECUTE CAMERA MODE — S715

EXTRACT BAYER PATTERN THROUGH CAMERA MODULE — S717

INTERPOLATE R OR B COMPONENT USING ARITHMETIC AVERAGE OF VALUES OF R OR B COMPONENTS POSITIONED IN VERTICAL OR HORIZONTAL DIRECTION FROM EACH G POSITION — S719

INTERPOLATION COMPLETION IN G POSITIONS? — S721
NO

B

YES

EXTRACT G COMPONENTS OF G POSITIONS NEIGHBORING TO R OR B POSITION — S823

CONVERT EXTRACTED G COMPONENTS INTO 2X2 PIXEL FORMAT — S825

PERFORM CONVERSION INTO 2X2 PIXEL FORMAT BASED ON DCT COEFFICIENTS THROUGH DCT PROCESS — S827

a

# FIG.12A

FIG.12B

FIG.13A

FIG.13B

FIG.13C